# EUROPEAN PATENT APPLICATION

(11) **EP 4 589 335 A1**
(43) Date of publication of application: **23.07.2025**
(21) Application number: 25150561.6
(22) Date of filing: 07.01.2025
(51) Int. Cl.: G01S 7/481, G01S 17/08, G01S 7/497, G01S 7/484, G01S 7/4911

(54) **ATTENUATION WALL TO REDUCE OPTICAL NOISE IN AN OPTICAL RANGING SENSOR**

(30) Priority: 19.01.2024 US 202418417190
(71) Applicant: STMicroelectronics International N.V., 1228 Plan-les-Ouates, Geneva (CH)
(72) Inventor: MAO, Yandong, SHANGHAI, 200240 (CN); JOHNSON, Brandon Scott, EDINBURGH, EH6 5TE (GB); TEO, Tat Ming, 797463 SINGAPORE (SG)
(74) Representative: Casalonga

(57) **Abstract**

A housing cap for an optical ranging sensor and an electronic system for transmitting and receiving optical radiation while minimizing optical noise, such as ambient light, received at the reference sensor of the optical ranging sensor are provided. An example housing cap for an optical ranging sensor may include a barrier wall defining a transmission cavity and a receiving cavity. The transmission cavity including an optical radiation source positioned to direct ranging optical radiation through a transmission opening toward a target object, a reference sensor positioned to receive a portion of the ranging optical radiation, and an attenuation wall positioned between the optical radiation source and the reference sensor, defining an attenuation gap through which the portion of the ranging optical radiation passes. The receiving cavity including an optical radiation receiver positioned to receive ranging optical radiation reflected off the target object through a receiver opening.

## Description

### TECHNOLOGICAL FIELD

Embodiments of the present disclosure relate generally to a housing cap for an optical ranging sensor, and more particularly, to a housing cap including an attenuation wall to reduce the effect of ambient light on an optical ranging sensor.

### BACKGROUND

Various example embodiments address technical problems associated with optical noise from unwanted sources in an optical sensor, for example, an optical ranging sensor, a proximity sensor, or an image sensor. During operation of an optical ranging sensor, various sources of ambient light may be present in the operating environment. Some of the ambient light may enter into the optical ranging sensor, for example, through a transmission opening in a housing cap covering the internal components of the optical ranging sensor. The increased optical noise from ambient light may lead to inaccurate and/or inconsistent readings from an optical ranging sensor.

Applicant has identified many technical challenges and difficulties associated with reducing the optical noise received at a reference sensor of an optical ranging sensor. Through applied effort, ingenuity, and innovation, Applicant has solved problems related to the receipt of optical noise in an optical ranging sensor by developing solutions embodied in the present disclosure, which are described in detail below.

### BRIEF SUMMARY

Various embodiments are directed to an example housing cap for an optical ranging sensor and an electronic system for transmitting and receiving optical radiation while minimizing optical noise, such as ambient light, received at the reference sensor of the optical ranging sensor. An example housing cap for an optical ranging sensor may include a barrier wall defining a transmission cavity and a receiving cavity. The transmission cavity comprising an optical radiation source positioned to direct ranging optical radiation through a transmission opening toward a target object, a reference sensor positioned to receive a portion of the ranging optical radiation, and an attenuation wall positioned between the optical radiation source and the reference sensor, defining an attenuation gap through which the portion of the ranging optical radiation passes. The receiving cavity comprising an optical radiation receiver positioned to receive ranging optical radiation reflected off the target object through a receiver opening.

In some embodiments, the housing cap further comprises a top portion, wherein the transmission opening and the receiver opening are defined by the top portion of the housing cap.

In some embodiments, the attenuation wall further comprising an attached end, attached to the top portion of the housing cap; and a distal end, extending into the transmission cavity.

In some embodiments, the top portion and the attenuation wall comprise a single, continuous structure.

In some embodiments, the housing cap is formed by an injection molding process.

In some embodiments, the optical radiation source is attached to a surface of a substrate.

In some embodiments, the attenuation gap comprises a fluid passage between the distal end of the attenuation wall and the surface of the substrate.

In some embodiments, the housing cap further comprises an electromagnetic interference shield attached to the surface of the substrate and covering at least a portion of the optical radiation source.

In some embodiments, the attenuation gap comprises a fluid passage between the distal end of the attenuation wall and the electromagnetic interference shield.

In some embodiments, the barrier wall creates an optically impenetrable barrier between the transmission cavity and the receiving cavity.

In some embodiments, the attenuation wall blocks the reference sensor from receiving ambient light entering the transmission opening.

In some embodiments, the attenuation gap is between 80 micrometers and 160 micrometers.

In some embodiments, an attenuation wall distance from the optical radiation source to the attenuation wall is between 2.75 millimeters and 3.25 millimeters.

In some embodiments, the transmission opening comprises a diameter between 1.75 millimeters and 2.25 millimeters.

In some embodiments, the housing cap further comprises a transmission lens positioned in the transmission opening.

In some embodiments, a transmission lens distance from the optical radiation source to the transmission lens is between 2.25 millimeters and 2.75 millimeters.

In some embodiments, a reference sensor distance defining a distance between the reference sensor and the optical radiation source is between 4.25 millimeters and 4.5 millimeters.

An electronic system configured to determine a proximity of a target object is further provided. The electronic system comprising an external cover and an optical ranging sensor disposed on an interior side of the external cover, opposite the target object, the optical ranging sensor comprising a housing cap comprising a barrier wall defining a transmission cavity and a receiving cavity. The transmission cavity comprising an optical radiation source positioned to direct ranging optical radiation through a transmission opening toward a target object, a reference sensor positioned to receive a portion of the ranging optical radiation, and an attenuation wall positioned between the optical radiation source and the reference sensor, defining an attenuation gap through which the portion of the ranging optical radiation passes. The receiving cavity comprising an optical radiation receiver positioned to receive ranging optical radiation reflected off the target object through a receiving opening.

In some embodiments, the housing cap further comprising a top portion defining the transmission opening and the receiving opening, wherein the attenuation wall further comprises an attached end, attached to the top portion of the housing cap, and a distal end, extending into the transmission cavity.

In some embodiments, the attenuation gap is between 80 micrometers and 160 micrometers.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 depicts a cross-section view of an example optical ranging sensor transmitting ranging optical radiation at a target object and receiving reflected ranging optical radiation in accordance with an example embodiment of the present disclosure.
FIG. 2 depicts a cross-section view of an example optical ranging sensor comprising a housing cap with an attenuation wall in accordance with an example embodiment of the present disclosure.
FIG. 3 depicts a cross-section perspective view of an example optical ranging sensor comprising a electromagnetic interference shield in accordance with an example embodiment of the present disclosure.
FIG. 4 depicts a cross-section view of an example attenuation wall including example measurements in accordance with an example embodiment of the present disclosure.
FIG. 5 illustrates a plurality of example electronic systems comprising a optical ranging sensor in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

### OVERVIEW

Various example embodiments address technical problems associated with receiving optical noise at a reference sensor of an optical ranging sensor (e.g., optical ranging sensor, optical proximity sensor, optical image sensor, etc.). As understood by those of skill in the field to which the present disclosure pertains, there are numerous example scenarios in which the accuracy and consistency of an optical sensor may be improved by reducing the amount of optical noise received at the reference sensor.

During operation of an optical ranging sensor, optical radiation is transmitted by an optical radiation source. The optical radiation may be directed through one or more optical structures, display screens, cover glass, and/or lens toward a target object. The transmitted optical radiation may interact with the target object, reflecting a reflected portion of the transmitted optical radiation toward an optical radiation receiver on the optical ranging sensor. In addition, a portion of the transmitted optical radiation may be directed internally toward a reference sensor. The reference sensor may be configured to produce a reference signal for comparison with the reflected portion of the transmitted optical radiation. Based on the comparison of the reflected portion of the transmitted optical radiation returned from the target object and the reference signal from the reference sensor, an optical ranging sensor may determine certain characteristics related to the proximity of the target object, for example, the distance of the target object, position of the target object, motion of the target object, and/or the speed of the target object.

In addition to the portion of transmitted optical radiation directed internally toward the reference sensor, optical noise from unwanted sources, such as ambient light in the operating environment, may be received by the reference sensor. Optical noise received from unwanted sources, may diminish the reference signal generated by the reference sensor. For example, optical noise from ambient light may enter in through the transmission opening of the optical ranging sensor and interact with the reference sensor. An increase in optical noise at the reference sensor equates to a reduction in the signal-to-noise ratio (SNR) of the reference portion of the transmitted optical radiation. As the SNR of the reference signal is reduced due to optical noise, the output from the optical ranging sensor becomes increasingly inaccurate and inconsistent. Optical noise from the operating environment becomes even more problematic on optical ranging sensors with wide-angle transmission apertures designed to transmit optical radiation over an increased field of transmission.

Previous attempts to mitigate the receipt of optical noise at the reference sensor have included placing optical filters over the transmission opening. Filters allow the transmitted light to escape but prevent optical noise from entering the optical ranging sensor. However, filters on the transmission opening add to the overall cost of the optical ranging sensor. In addition, positioning the sensors on the transmission opening may increase the complexity of manufacturing optical ranging sensors. Further, the glue used to attach the filters may crack and give way over time, causing the filter to dislodge or displace during operation. With the demand for highly accurate optical ranging sensors increasing, there is a need to reduce the amount of optical noise received at the reference sensor of optical ranging sensors, while subsequently reducing cost, simplifying manufacturing complexity, and increasing reliability.

The various example embodiments described herein utilize various techniques to reduce or eliminate the reception of optical noise at the reference sensor of an optical ranging sensor. For example, in some embodiments, an attenuation wall is placed in the transmission cavity of an optical ranging sensor between the optical radiation source and the reference sensor. The attenuation wall prevents optical noise, such as ambient light from the operating environment, entering the transmission cavity of the optical ranging sensor from interacting with the reference sensor. In addition, the attenuation wall defines an attenuation gap between a distal end of the attenuation wall and a substrate surface or internal structure of the optical ranging sensor. The attenuation gap enables transmission of a portion of the transmitted optical radiation to the reference sensor, while blocking optical noise from reaching the reference sensor.

As a result of the herein described example embodiments and in some examples, the accuracy and reliability of an optical ranging sensor may be greatly improved. In addition, the cost and complexity required for manufacturing optical ranging sensors may be greatly reduced.

For example, the attenuation wall reduces the amount of optical noise received at the reference sensor of an optical ranging sensor. A reduction of optical noise at the reference sensor enables an accurate reference signal based on the transmitted optical radiation to be generated. An accurate reference signal produces more accurate distance and motion data when compared with the ranging optical radiation reflected off a target object.

In addition, the attenuation wall eliminates the need for optical filters placed over the transmission opening of the optical ranging sensor. Optical filters add to the overall cost of the optical ranging sensor due to the cost of the optical filter and the additional manufacturing complexity of installing an optical filter. In addition, the method for attaching the optical filter may fail. For example, the glue used to attach some optical filters may crack, allowing the optical filter to become detached. Once the optical filter has detached, the accuracy of the optical ranging sensor may be compromised.

### EXAMPLE OPTICAL RANGING SENSOR

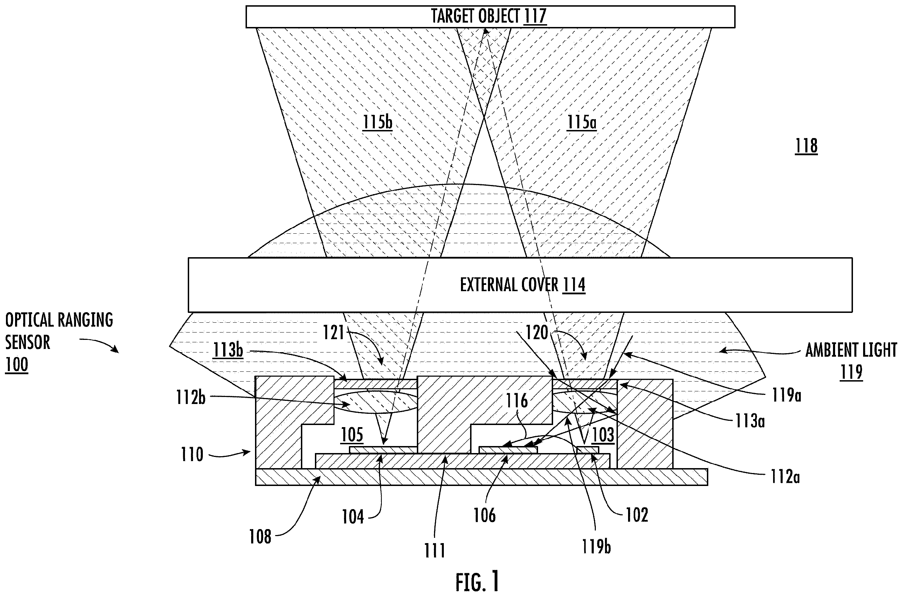

Referring now to FIG. 1, an example optical ranging sensor 100 is provided. As depicted in FIG. 1, the example optical ranging sensor 100 includes a housing cap 110 comprising a barrier wall 111 dividing the optical ranging sensor 100 into two cavities, a transmission cavity 103 and a receiving cavity 105. The transmission cavity 103 includes an optical radiation source 102 and a reference sensor 106 attached to a substrate 108. The optical radiation source 102 is configured to output ranging optical radiation 115a and is aligned with a transmission opening 120 in the housing cap 110 such that the ranging optical radiation 115a is directed through a transmission lens 112a and a transmission filter 113a toward a target object 117. The target object 117 reflects at least a portion of the ranging optical radiation 115a as reflected ranging optical radiation 115b back toward the optical ranging sensor 100. The reflected ranging optical radiation 115b is received through a receiving opening 121 in the housing cap 110 and collected by an optical radiation receiver 104 attached to the substrate 108. The receiving opening 121 includes a receiver filter 113b and a receiver lens 112b to direct the reflected ranging optical radiation 115b into the receiving cavity 105 and toward the optical radiation receiver 104. As depicted in FIG. 1, the operating environment 118 of the optical ranging sensor 100 may include optical noise 119, such as ambient light. A portion of the optical noise 119a may enter through the transmission opening 120 and interact with the reference sensor 106. Optical noise 119 received at the reference sensor 106 effects the performance of the optical ranging sensor 100. As further depicted in FIG. 1, an external cover 114 is positioned between the optical ranging sensor and the target object 117.

As depicted in FIG. 1, the example optical ranging sensor 100 includes a housing cap 110. A housing cap 110 is any package, cover, container, or other covering configured to protect the internal electrical components and circuitry of the optical ranging sensor 100. A housing cap 110 may comprise plastic, ceramic, or other protective material. The housing cap 110 is attached to the substrate 108 to provide stability and further protect the internal electrical components of the optical ranging sensor 100. Although depicted in FIG. 1 as attached to the substrate 108, in some embodiments, the housing cap 110 may be attached to a receiving element configured to receive and attach the housing cap 110. In some embodiments, the housing cap 110 may further include conductive pins and/or conductive pads to provide an electrical connection to the internal electrical components of the optical ranging sensor 100.

As further depicted in FIG. 1, the housing cap 110 comprises a barrier wall 111. The barrier wall 111 is any protrusion, appendage, or other structure a part of or attached to the housing cap 110 and designed to abut to the substrate 108, or other surface, to divide the internal compartment of the optical ranging sensor 100 into a transmission cavity 103 and a receiving cavity 105. In some embodiments, the housing cap 110 may attach to the substrate or other surface at the barrier wall 111. The barrier wall 111 may comprise plastic, ceramic, or other protective material. In some embodiments, the barrier wall 111 and the housing cap 110 may form a single, continuous structure. For example, the barrier wall 111 may be formed with the housing cap 110 as part of an injection molding process. The barrier wall 111 forms an optically impenetrable barrier between the transmission cavity 103 and the receiving cavity 105. An optically impenetrable barrier prevents light or other optical radiation from traversing from one side of the barrier wall 111 to the other. For example, ranging optical radiation 115a transmitted from the optical radiation source 102 is unable to internally traverse the barrier wall 111 and enter into the receiving cavity 105.

As further depicted in FIG. 1, the optical ranging sensor 100 includes an optical radiation source 102. An optical radiation source 102 is any light source, such as a laser diode, a light-emitting diode, bulb, semiconductor device, or other photon-emitting structure configured to generate ranging optical radiation 115a. In some embodiments, an optical radiation source 102 may comprise a semiconductor laser diode, for example, a vertical cavity surface emitting laser (VCSEL) and/or an edge emitting laser diode. In general, an optical radiation source 102 may output a coherent light beam upon receipt of a current.

As further depicted in FIG. 1, the optical radiation source 102 is configured to output ranging optical radiation 115a. Ranging optical radiation 115a is any optical signal transmitted by the optical radiation source 102 toward a target object 117 to determine characteristics related to the position and/or motion of the target object 117. In some embodiments, the ranging optical radiation 115a may be a pulsed laser signal. For example, the optical radiation source 102 may be configured to generate uniform laser pulses. Utilizing a pulsed laser signal may enable a controller to determine the time of flight of the ranging optical radiation 115a once the reflected ranging optical radiation 115b is received at the optical radiation receiver 104. In some embodiments, the ranging optical radiation 115a may be a continuous wave laser signal. In such embodiments, the continuous wave laser signal may enable a controller to determine proximity of a target object 117 by correlating the proximity of the target object 117 with the phase change in the ranging optical radiation 115a as it is emitted by the optical radiation source 102, reflected off the target object 117, and subsequently received by the optical radiation receiver 104. Characteristics related to the position and/or motion of target objects 117 may include the distance of the target object 117 from the optical sensor, the position of the target object 117, the speed of the target object 117, the direction of motion of the target object 117, and other similar characteristics related to the position of the target object 117 in the operating environment 118.

As further depicted in FIG. 1, the ranging optical radiation 115a is transmitted through a transmission opening 120 defined by the housing cap 110. A transmission opening 120 is any hole, slit, aperture, or other opening aligned with the optical radiation source 102 to facilitate the transmission of ranging optical radiation 115a toward a target object 117. A transmission opening 120 may include optical features such as lenses (e.g., transmission lens 112a), structures, beam shaping elements or light diffusers, or other features to direct the ranging optical radiation 115a toward a target object 117 and/or various portions of a target object 117.

As depicted in FIG. 1, one technique used to prevent optical noise 119 from entering the transmission cavity 103 is to place a transmission filter 113a over at least a portion of the transmission opening 120. A transmission filter 113a may be designed to block at least a portion of the light spectrum from entering the transmission cavity 103. However, a transmission filter 113a may allow certain wavelengths of optical noise 119 to enter into the transmission cavity 103. In addition, transmission filters 113a add to the overall cost of the optical ranging sensor 100. Further, transmission filters 113a may be difficult to align and attach to the transmission opening 120. Transmission filters 113a may also fail, for example, transmission filters 113a may detach, allowing all optical noise 119 to enter the transmission cavity 103.

As further depicted in FIG. 1, the example optical ranging sensor 100 includes a substrate 108. The substrate 108 is any structure configured to support the attachment of the components of the optical ranging sensor 100, including the housing cap 110. In some embodiments, the substrate 108 may comprise a printed circuit board (PCB) or ceramic alumina including electrical connections connecting the components of the optical ranging sensor 100 to a processor, controller, analog-to-digital converter, or other electrical components. In some embodiments, the optical radiation source 102, the reference sensor 106, and the optical radiation receiver 104 may all be electrically coupled by the substrate 108.

As further depicted in FIG. 1, the optical ranging sensor 100 includes a reference sensor 106. A reference sensor 106 is any light-sensitive sensor configured to produce a reference signal based on a portion of ranging optical radiation 116 received from the optical radiation source 102. During operation of an optical ranging sensor 100, the optical radiation source 102 transmits ranging optical radiation 115a toward a target object 117. A portion of the ranging optical radiation 116 is directed toward the reference sensor. Thus, the received portion of the ranging optical radiation 116 may be compared to the reflected ranging optical radiation 115b reflected off the target object 117. By comparing the reference signal produced by the reference sensor 106 with the electrical signal produced by the optical radiation receiver 104, physical properties of the target object 117, including physical properties related to the position and motion of the target object 117 may be determined.

However, as further depicted in FIG. 1, the operating environment 118 of the optical ranging sensor 100 may include optical noise 119. Optical noise is any light or other optical radiation in the operating environment 118 of the optical ranging sensor 100 that may enter into the transmission cavity 103 through the transmission opening 120 or another opening in the housing cap 110. Optical noise may comprise ambient light and/or light from other optical radiation sources. As depicted in FIG. 1, a portion of the optical noise 119a may enter into the transmission cavity 103 and be captured by the reference sensor 106. A portion of optical noise 119a in the transmission cavity 103 may be especially prevalent in an instance in which the transmission filter 113a is detached or removed. The portion of optical noise 119a captured by the reference sensor 106 may have adverse effects on the performance and accuracy of the optical ranging sensor 100, as the reference signal generated by the reference sensor 106 may be altered by the presence of optical noise 119a captured by the reference sensor 106.

As further depicted in FIG. 1, the ranging optical radiation 115a transmitted by the optical radiation source 102 is directed at a target object 117. A target object 117 is any object, structure, person, entity, or other item positioned in the line-of-sight of the ranging optical radiation 115a transmitted by the optical ranging sensor 100. In some embodiments, the optical ranging sensor 100 may be configured to determine one or more proximity characteristics of the target object 117, such as the spatial position, composition, proximity, motion, and/or speed of the target object 117. For example, in some embodiments, the optical ranging sensor 100 may be positioned under the electronic display screen of a mobile device (e.g., external cover 114) and may be configured to detect a target object 117 within a pre-determined threshold distance of the optical ranging sensor 100. In an instance in which a target object 117 is within the pre-determined threshold distance of the optical ranging sensor 100, the mobile device may deactivate the touch screen, turn off the display, or take any other relevant action.

As further depicted in FIG. 1, a certain portion of the ranging optical radiation 115a may reflect off the target object 117 as reflected optical radiation 115b. Reflected optical radiation 115b is any portion of the ranging optical radiation 115a transmitted by the optical radiation source 102 of the optical ranging sensor 100 that is reflected off the target object 117, and received by the optical radiation receiver 104 of the optical ranging sensor 100. The reflected ranging optical radiation 115b is used to determine the proximity characteristics of the target object 117.

As further depicted in FIG. 1, the optical ranging sensor 100 includes an optical radiation receiver 104. An optical radiation receiver 104 is any set of one or more photodiodes, integrated circuits, sensors, light sensing diodes, or other structures that produce an electric signal as a result of light received at the optical radiation receiver 104. The electric current output from the optical radiation receiver 104 may be used to determine the intensity or amplitude of the optical radiation striking the optical radiation receiver 104. In some embodiments, the optical radiation receiver 104 may be a light sensitive semiconductor diode that creates an electron-hole pair at the p-n junction when a photon of sufficient energy strikes the optical radiation receiver 104.

As depicted in FIG. 1, the optical radiation receiver 104 is electrically connected to the substrate 108. In some embodiments, the optical radiation receiver 104 may be further electrically connected to a processing device. The processing device may be configured to receive the electrical signal generated by the optical radiation receiver 104 representing the intensity of reflected ranging optical radiation 115b received at the optical radiation receiver 104 and the electrical signal generated by the reference sensor 106. In some embodiments, the processing device may determine a time-of-flight of the optical radiation and/or a change in phase of the optical radiation and determine one or more characteristics related to the physical position of the target object 117.

As further depicted in FIG. 1, the reflected ranging optical radiation 115b is received at optical radiation receiver 104 through a receiver opening 121 defined by the housing cap 110. A receiver opening 121 is any hole, slit, aperture, or other opening aligned with the optical radiation receiver 104 to facilitate the transmission of reflected ranging optical radiation 115b toward the optical radiation receiver 104. A receiver opening 121 may include optical features such as lenses (e.g., receiver lens 112b), structures, beam shaping elements or light diffusers, or other features to direct and/or filter the reflected ranging optical radiation 115b. In addition, a receiver filter 113b may be positioned on the receiver opening 121 to block optical noise 119 and other unwanted optical radiation from entering the receiving cavity 105.

As further depicted in FIG. 1, an external cover 114 is positioned between the optical ranging sensor 100 and the target object 117. An external cover 114 is any transparent and/or semi-transparent device positioned external to the housing cap 110 through which the ranging optical radiation 115a and reflected ranging optical radiation 115b pass before and after encountering the target object 117. In some embodiments, the external cover 114 may be the electronic display screen of an electronic device, such as a mobile phone. In such an embodiment, the optical ranging sensor 100 transmits and receives optical radiation through the electronic display screen to determine proximity characteristics of a target object 117 external to the mobile device. An electronic display screen may be transparent or semi-transparent to certain wavelengths of light, such that reflected ranging optical radiation 115b may be received by the optical radiation receiver 104 behind or under the electronic display screen.

### EXAMPLE HOUSING CAP

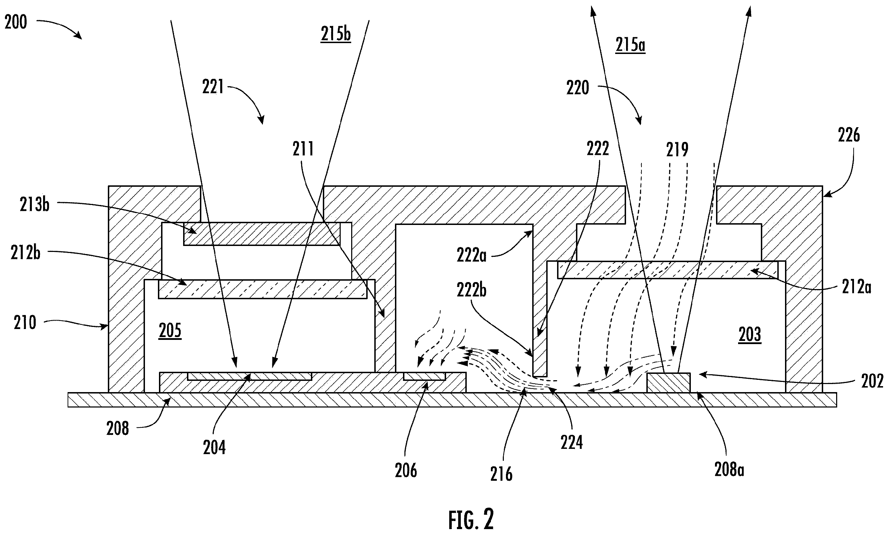

Referring now to FIG. 2, an example optical ranging sensor 200 comprising an attenuation wall 222 positioned to block the reception of optical noise 219 at the reference sensor 206 is provided. As depicted in FIG. 2, optical ranging sensor 200 includes a housing cap 210 having a top portion 226 and comprising a barrier wall 211 dividing the optical ranging sensor 200 into two cavities, a transmission cavity 203 and a receiving cavity 205. The transmission cavity 203 includes an optical radiation source 202 and a reference sensor 206 attached to a substrate 208 having a top surface 208a. The optical radiation source 202 is aligned with a transmission opening 220 in the top portion 226 of the housing cap 210 and is configured to output ranging optical radiation 215a through a transmission lens 212a toward a target object. The target object reflects at least a portion of the ranging optical radiation 215a as reflected ranging optical radiation 215b back toward the optical ranging sensor 200. The reflected ranging optical radiation 215b is received through a receiver opening 221 in the top portion 226 of the housing cap 210 and collected by an optical radiation receiver 204 attached to the substrate 208. The receiver opening 221 includes a receiver filter 213b and a receiver lens 212b configured to direct the reflected ranging optical radiation 215b into the receiving cavity 205 and toward the optical radiation receiver 204.

As depicted in FIG. 2, the transmission lens (e.g., transmission lens 112a) has been removed. Optical noise 219 from the operating environment is able to enter into the transmission cavity 203 through the transmission opening 220. However, the housing cap 210 includes an attenuation wall 222 having an attached end 222a and a distal end 222b extending from the top portion 226 of the housing cap 210 toward the substrate 208. The attenuation wall 222 forms an attenuation gap 224 between the distal end 222b of the attenuation wall 222 and a top surface 208a of the substrate 208, allowing a portion of the ranging optical radiation 216 to pass to the reference sensor 206 while blocking the optical noise 219.

As depicted in FIG. 2, the housing cap 210 of the example optical ranging sensor 200 includes a top portion 226. The top portion 226 of the housing cap 210 defines the transmission opening 220 and receiver opening 221 of the optical ranging sensor 200. Thus, the top portion 226 of the housing cap 210 comprises the portion of the housing cap 210 at which the ranging optical radiation 215a is directed and the reflected ranging optical radiation 215b returns. The top portion 226 allows the flow of ranging optical radiation 215a, 215b into and out of the optical ranging sensor 200 while generally blocking optical noise 219 from the operating environment from entering into the transmission cavity 203 and receiving cavity 205. In addition, the top portion 226 of the housing cap 210, along with the outer walls of the housing cap 210 provides protection to the internal electrical components of the optical ranging sensor.

As further depicted in FIG. 2, the housing cap 210 includes an attenuation wall 222 extending from the top portion 226 of the housing cap 210 and into the transmission cavity 203 toward the top surface 208a of the substrate 208. The attenuation wall 222 is any barrier, wall, or obstruction defined by the housing cap 210 and positioned within the transmission cavity 203 between the transmission opening 220 aligned with the optical radiation source 202 and the reference sensor 206. The attenuation wall 222 comprises any optically impenetrable material. In some embodiments, the attenuation wall 222 comprises plastic, ceramic, or other material comprising the housing cap 210. In some embodiments, the attenuation wall 222, the barrier wall 211, the top portion 226, and the housing cap 210 may form a single, continuous structure. For example, the attenuation wall 222 may be formed with the housing cap 210 as part of an injection molding process. Alternatively, in some embodiments, the attenuation wall 222 may comprise a separate material from the housing cap 210 and/or be separately attached to the top portion 226 of the housing cap 210.

As depicted in FIG. 2, the attenuation wall 222 further defines an attenuation gap 224. An attenuation gap 224 is any opening, aperture, slit, hole, or other gap in the attenuation wall 222 enabling the passage of optical radiation from one side of the attenuation wall 222 to the other. In some embodiments, the attenuation gap 224 may enable fluid passage from one side of the attenuation wall 222 to the other. Fluid passage allows the passage of a fluid, such as a liquid or gas, in addition to optical radiation, through the attenuation gap 224.

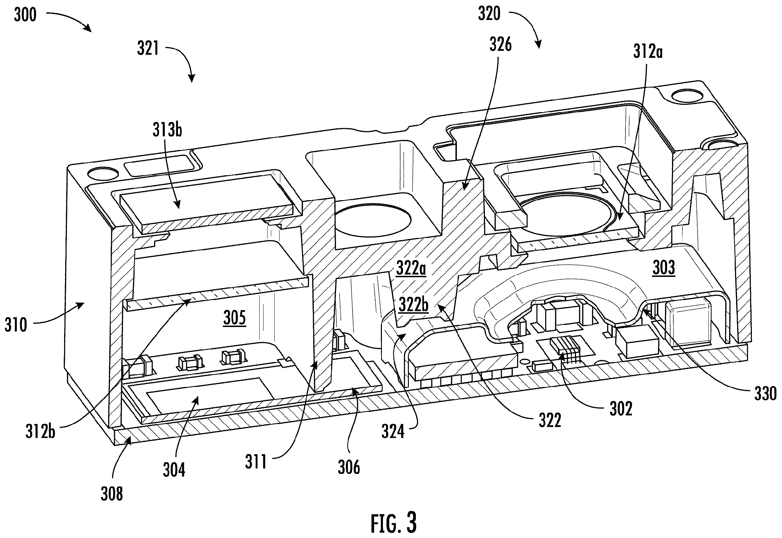

As depicted in FIG. 2, the attenuation wall 222 includes an attached end 222a and a distal end 222b. The attached end 222a connects the attenuation wall 222 to the top portion 226 of the housing cap 210. The distal end 222b extends into the transmission cavity 203 to form the attenuation gap 224. As depicted in FIG. 2, the attenuation gap 224 is formed between the distal end 222b of the attenuation wall 222 and the top surface 208a of the substrate 208. In some embodiments, the attenuation gap 224 may be formed by a gap or hole in the attenuation wall 222. For example, the attenuation wall 222 may be divided into two segments, one extending from the top portion 226 of the housing cap 210 into the transmission cavity 203 and one extending from the top surface 208a of the substrate 208 into the transmission cavity 203. The attenuation gap 224 may be formed at a point in which the two portions of the attenuation wall meet. In some embodiments, the attenuation gap 224 may be formed between the distal end 222b of the attenuation wall 222 and another structure of the optical ranging sensor 200. For example, the attenuation gap 224 may be formed between the distal end 222b of the attenuation wall 222 and an electrical component, a protective package of an electrical component, a supportive structure, or any other structure in the transmission cavity 203 of the optical ranging sensor 200. In one specific embodiment depicted in FIG. 3, an attenuation gap is formed between an electromagnetic interference (EMI) shield and the distal end of the attenuation wall.

Referring now to FIG. 3, an example optical ranging sensor 300 further including an EMI shield 330 is provided. As depicted in FIG. 3, the example optical ranging sensor 300 includes a housing cap 310 having a top portion 326 and comprising a barrier wall 311 dividing the optical ranging sensor 300 into two cavities, a transmission cavity 303 and a receiving cavity 305. The transmission cavity 303 includes an optical radiation source 302 and a reference sensor 306 attached to a substrate 308. The optical radiation source 302 is aligned with a transmission opening 320 in the top portion 326 of the housing cap 310 and is configured to output ranging optical radiation through a transmission lens 312a toward a target object. The top portion 326 of the housing cap 310 further defines a receiver opening 321 configured to receive reflected ranging optical radiation and direct the reflected ranging optical radiation toward an optical radiation receiver 304 attached to the substrate 308. The receiver opening 321 includes a receiver filter 313b and a receiver lens 312b configured to direct the reflected ranging optical radiation 215b into the receiving cavity 305 and toward the optical radiation receiver 304.

As further depicted in FIG. 3, the housing cap 310 includes an attenuation wall 322 having an attached end 322a and a distal end 322b extending from the top portion 326 of the housing cap 310 into the transmission cavity 303. The transmission cavity 303 further includes an EMI shield 330 enclosing a plurality of electrical components internal to the optical ranging sensor 300. The attenuation wall 322 forms an attenuation gap 324 between the distal end 322b of the attenuation wall 322 and a surface of the EMI shield 330, allowing a portion of the ranging optical radiation to pass to the reference sensor 306 while blocking optical noise.

As depicted in FIG. 3, an attenuation gap 324 is formed between the distal end 322b of the attenuation wall 322 and an internal structure (e.g., EMI shield 330) of the optical ranging sensor 300. Although depicted as an EMI shield 330 forming the attenuation gap 324, the attenuation gap 324 may be formed between the attenuation wall 322 and any structure within the transmission cavity 303 configured to block optical radiation. For example, the internal structure may be a protective cover, the surface of one or more electrical components, insulating materials, packaging of an electrical component, an EMI shield 330, or any combination of elements.

An EMI shield 330 is commonly attached to the substrate 308 or other attaching surface within an optical ranging sensor 300 and positioned to enclose one or more electrical components. In some embodiments, an electrical component may be susceptible to disruption from external electromagnetic emissions. For example, an electrical component may be configured to transmit and receive data. External electromagnetic emissions may corrupt data during processing or transmission, or may even cause the electrical component to cease operation. An EMI shield 330 may be positioned to envelope one or more electrical components susceptible to disruption from external electromagnetic emissions. In some embodiments, an electrical component may be identified as a source emitter of electromagnetic radiation. An EMI shield 330 may be positioned to envelope such an electrical component to prevent the internal electromagnetic emissions from exiting the EMI shield 330. An EMI shield 330 may further include one or more openings to allow the transmission of optical and/or electrical signals, such as ranging optical radiation.

An EMI shield 330 may be opaque to optical radiation, such that optical radiation is unable to penetrate or pass through the EMI shield 330. Thus, in some embodiments, an EMI shield 330 positioned near the distal end 322b of the attenuation wall 322 may form an attenuation gap 324 through which a portion of the optical radiation from the optical radiation source 302 may pass while blocking at least a portion of the optical noise entering the transmission cavity 303 through the transmission opening 320.

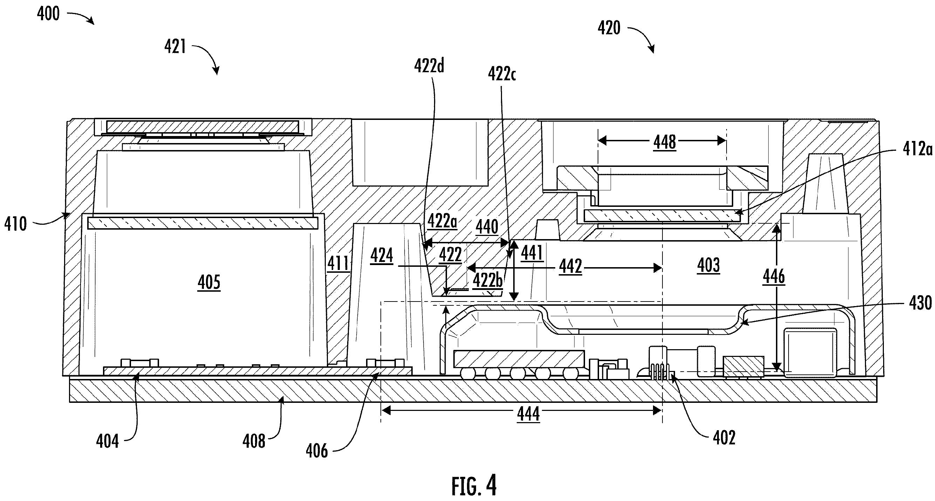

Referring now to FIG. 4, an example optical ranging sensor 400 is provided. As depicted in FIG. 4, the example optical ranging sensor 400 includes a housing cap 410 comprising a barrier wall 411 dividing the optical ranging sensor 400 into two cavities, a transmission cavity 403 and a receiving cavity 405. The transmission cavity 403 includes an optical radiation source 402 and a reference sensor 406 attached to a substrate 408. The optical radiation source 402 is aligned with a transmission opening 420 in the housing cap 410 and is configured to output ranging optical radiation through a transmission lens 412a. The housing cap 410 further defines a receiver opening 421 configured to receive reflected ranging optical radiation and direct the reflected ranging optical radiation toward an optical radiation receiver 404 attached to the substrate 408.

As further depicted in FIG. 4, the housing cap 410 includes an attenuation wall 422 having an attached end 422a and a distal end 422b extending from a top portion of the housing cap 410 into the transmission cavity 403. The transmission cavity 403 further includes an EMI shield 430 enclosing a plurality of electrical components internal to the optical ranging sensor 400. The attenuation wall 422 forms an attenuation gap 424 between the distal end 422b of the attenuation wall 422 and a surface of the EMI shield 430, allowing a portion of the ranging optical radiation to pass to the reference sensor 406 while blocking optical noise.

As depicted in FIG. 4, the attenuation wall 422 and the EMI shield 430 form an attenuation gap 424. The size of the attenuation gap 424 may vary based on the size and relative positions of the optical radiation source 402, the reference sensor 406, the attenuation wall 422, the attenuation gap 424, the transmission opening 420, and other components of the optical ranging sensor 400. For example, the attenuation wall depth 440, attenuation wall length 441, attenuation wall distance 442, reference sensor distance 444, transmission lens distance 446, and transmission opening diameter 448 may all affect the size and position of the attenuation gap 424.

The attenuation gap 424 is the gap between the distal end 422b of the attenuation wall 422 and the internal structure (e.g., EMI shield 430), or other surface most proximate the distal end 422b of the attenuation wall 422. The attenuation gap 424 may be measured based on the widest portion of the attenuation gap 424, the narrowest portion of the attenuation gap 424, the average distance of the attenuation gap 424, or other similar measuring mechanism. In some embodiments, the attenuation gap 424 is between 80 micrometers and 160 micrometers. More preferably between 90 micrometers and 150 micrometers. Most preferably between 100 micrometers and 140 micrometers.

The attenuation wall distance 442 represents the distance from the optical radiation source 402 to the center of the attenuation wall 422. The attenuation wall distance 442 may be between 2.75 millimeters and 3.25 millimeters. More preferably between 2.85 millimeters and 3.15 millimeters. Most preferably between 2.95 millimeters and 3.05 millimeters.

The attenuation wall 422 may further comprise an attenuation wall depth 440 and an attenuation wall length 441. The attenuation wall depth 440 represents the distance from the optical radiation source side 422c of the attenuation wall 422 to the reference sensor side 422d of the attenuation wall 422. The attenuation wall depth 440 may be between 1.25 millimeters and 2.25 millimeters. More preferably between 1.35 millimeters and 2.15 millimeters. Most preferably between 1.5 millimeters and 2.0 millimeters.

The attenuation wall length 441 represents the distance from the attached end 422a of the attenuation wall 422 to the distal end 422b of the attenuation wall 422. The attenuation wall length 441 may be dependent on the height of the housing cap 410, and or the transmission lens distance 446. In some embodiments, the attenuation wall length 441 is between 1.0 millimeters and 5.0 millimeters. More preferably between 1.25 millimeters and 4.0 millimeters. Most preferably between 1.5 millimeters and 3.0 millimeters.

As further depicted in FIG. 4, the reference sensor distance 444 represents the distance from the reference sensor 406 to the optical radiation source 402. In some embodiments, the reference sensor distance 444 is between 4.0 millimeters and 4.75 millimeters. More preferably between 4.2 millimeters and 4.55 millimeters. Most preferably between 4.25 millimeters and 4.5 millimeters.

As further depicted in FIG. 4, the transmission lens distance 446 represents the distance from the optical radiation source 402 to the transmission lens 412a. In some embodiments, the transmission lens distance 446 is between 2.1 millimeters and 2.9 millimeters. More preferably between 2.2 millimeters and 2.8 millimeters. Most preferably between 2.25 millimeters and 2.75 millimeters.

As further depicted in FIG. 4, the transmission opening diameter 448 represents the diameter of the transmission opening 420. In some embodiments, the transmission opening diameter 448 is between 1.5 millimeters and 2.5 millimeters. More preferably between 1.6 millimeters and 2.4 millimeters. Most preferably between 1.75 millimeters and 2.25 millimeters.

### EXAMPLE ELECTRONIC SYSTEM

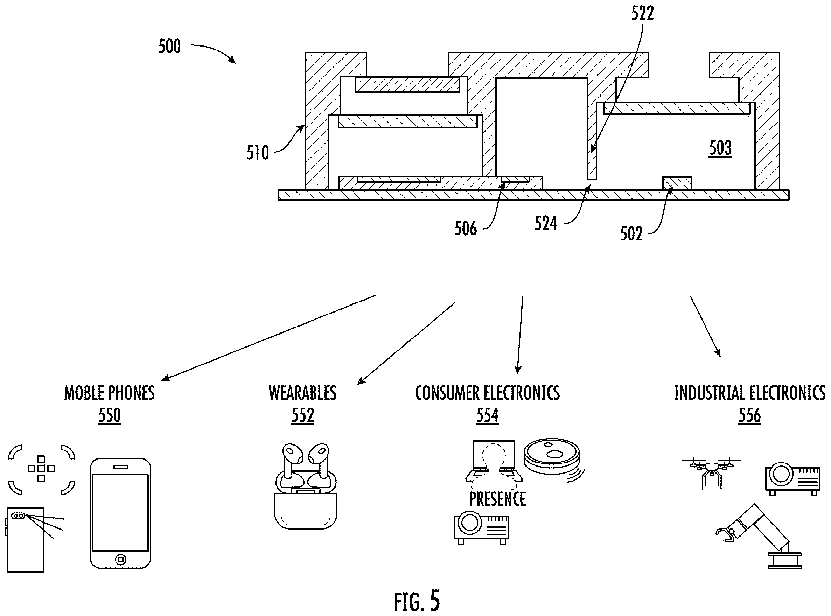

Referring now to FIG. 5, a plurality of example electronic systems configured to utilize an optical ranging sensor 500 to determine a proximity of a target object are provided. As depicted in FIG. 5, the housing cap 510 comprises an attenuation wall 522 within the transmission cavity 503 between the optical radiation source 502 and the reference sensor 506. The attenuation wall 522 defines an attenuation gap 524, allowing a portion of the transmitted optical radiation to encounter the reference sensor 506 while blocking optical noise from reaching the reference sensor 506. By blocking the optical noise, performance of the optical ranging sensor 500 may be greatly improved without the need of a transmission filter.

As further depicted in FIG. 5, various electronic systems including but not limited to mobile phones 550, wearables 552, consumer electronics 554, and industrial electronics 556 may benefit from utilizing an optical ranging sensor 500 in accordance with the embodiments described herein.

While this detailed description has set forth some embodiments of the present invention, the appended claims cover other embodiments of the present invention which differ from the described embodiments according to various modifications and improvements. For example, one skilled in the art may recognize that such principles may be applied to any electronic device that utilizes an optical source to determine a proximity and or range of a target object. For example, mobile devices such as phones, tablets, and laptops; wearable electronic devices such as watches and ear buds; consumer electronics such as robotic vacuums and projection systems; industrial electronics such as unmanned aerial vehicles, robotics; and so forth.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of' Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A housing cap for an optical ranging sensor, the housing cap comprising:
a barrier wall defining:
a transmission cavity comprising:
an optical radiation source positioned to direct ranging optical radiation through a transmission opening toward a target object;
a reference sensor positioned to receive a portion of the ranging optical radiation; and
an attenuation wall positioned between the optical radiation source and the reference sensor, defining an attenuation gap through which the portion of the ranging optical radiation passes; and
a receiving cavity comprising:
an optical radiation receiver positioned to receive ranging optical radiation reflected off the target object through a receiver opening.

2. The housing cap of claim 1, further comprising a top portion, wherein the transmission opening and the receiver opening are defined by the top portion of the housing cap.

3. The housing cap of claim 2, the attenuation wall further comprising an attached end, attached to the top portion of the housing cap; and a distal end, extending into the transmission cavity.

4. The housing cap of claim 3, wherein the top portion and the attenuation wall comprise a single, continuous structure.

5. The housing cap of claim 4, wherein the housing cap is formed by an injection molding process.

6. The housing cap of claim 3, wherein the optical radiation source is attached to a surface of a substrate.

7. The housing cap of claim 6, wherein the attenuation gap comprises a fluid passage between the distal end of the attenuation wall and the surface of the substrate.

8. The housing cap of claim 6, further comprising an electromagnetic interference shield attached to the surface of the substrate and covering at least a portion of the optical radiation source.

9. The housing cap of claim 8, wherein the attenuation gap comprises a fluid passage between the distal end of the attenuation wall and the electromagnetic interference shield.

10. The housing cap of claim 1, wherein the barrier wall creates an optically impenetrable barrier between the transmission cavity and the receiving cavity.

11. The housing cap of claim 1, wherein the attenuation wall blocks the reference sensor from receiving ambient light entering the transmission opening.

12. The housing cap of claim 1, wherein the attenuation gap is between 80 micrometers and 160 micrometers.

13. The housing cap of claim 1, wherein an attenuation wall distance from the optical radiation source to the attenuation wall is between 2.75 millimeters and 3.25 millimeters.

14. The housing cap of claim 1, wherein the transmission opening comprises a diameter between 1.75 millimeters and 2.25 millimeters.

15. The housing cap of claim 1, further comprising a transmission lens positioned in the transmission opening.

16. The housing cap of claim 15, wherein a transmission lens distance from the optical radiation source to the transmission lens is between 2.25 millimeters and 2.75 millimeters.

17. The housing cap of claim 1, wherein a reference sensor distance defining a distance between the reference sensor and the optical radiation source is between 4.25 millimeters and 4.5 millimeters.

18. An electronic system configured to determine a proximity of a target object comprising:
an external cover; and
an optical ranging sensor disposed on an interior side of the external cover, opposite the target object, the optical ranging sensor comprising:
a housing cap comprising a barrier wall defining:
a transmission cavity comprising:
an optical radiation source positioned to direct ranging optical radiation through a transmission opening toward a target object;
a reference sensor positioned to receive a portion of the ranging optical radiation; and
an attenuation wall positioned between the optical radiation source and the reference sensor, defining an attenuation gap through which the portion of the ranging optical radiation passes; and
a receiving cavity comprising:
an optical radiation receiver positioned to receive ranging optical radiation reflected off the target object through a receiving opening.

19. The electronic system of claim 18, the housing cap further comprising:
a top portion defining the transmission opening and the receiving opening,
wherein the attenuation wall further comprises an attached end, attached to the top portion of the housing cap, and a distal end, extending into the transmission cavity.

20. The electronic system of claim 18, wherein the attenuation gap is between 80 micrometers and 160 micrometers.
